# EUROPEAN PATENT APPLICATION

(11) **EP 1 635 263 A2**
(43) Date of publication of application: **15.03.2006**
(21) Application number: 05107761.8
(22) Date of filing: 24.08.2005
(51) Int. Cl.: G06F 11/36

(54) **Method and Apparatus for Inserting Code**

(30) Priority: 26.08.2004 GB 0419003
(71) Applicant: Hewlett-Packard Development Company, L.P., Houston, TX 77070 (US)
(72) Inventor: K, Sudheer, 560052, Bangalore (IN)
(74) Representative: Jones, Bruce Graeme Roland

(57) **Abstract**

A method for inserting code during execution of a process in a computing environment, including enabling taken branch traps on the process, intercepting a branch encountered during execution of the process, and redirecting processing of the branch instruction to a routine. The intercepting of the branch and the redirecting of processing may be performed by a trap handler.

## Description

### FIELD OF THE INVENTION

The present invention relates to a method and apparatus for inserting code in computing environments, and is of particular but by no means exclusive application in effecting dynamic code insertion and for identifying and preventing stack buffer overflow security attacks.

### BACKGROUND OF THE INVENTION

Patching is an existing technique whereby programming code is inserted into existing code without affecting that existing code. Such code insertion can be done either statically or dynamically, although dynamic code insertion generally has advantages over static code insertion. Dynamic code insertion is also referred to as "dynamic patching" or as the insertion of a "dynamic patch".

Code insertion is used in many tasks, including tracing, debugging and instruction profiling. Code insertion can be used to implement return address stacks to prevent security vulnerabilities such as stack-based attacks, and to insert a wrapper function (or trampoline) for intercepting a function call for tracing, debugging, profile sampling and stack-based attack monitoring purposes. However, although code insertion is extremely useful, it can result in code bloat as well as performance overhead.

US Patent Application No. 20030135718 teaches the use of taken branch traps for tracing functions. Taken branch traps (which are discussed in greater detail below) were designed for tracing and debugging, and are used by many microprocessor architectures.

However, while this document teaches a system for tracing instructions executed by applications, it does not provide any protection for those applications (such as against stack buffer overflow attacks).

Another dynamic code insertion scheme is provided by the DynInst API library (see, for example, www.cs.wisc.edu/~kosart/papers/dyn-security.pdf), but this scheme requires that a specific protocol be followed; this limits its use to processes that co-operate according to that protocol.

Another existing approach termed Caliper (a trade mark of Hewlett-Packard Company) uses a runtime code insertion technique that is based on Intel Itanium (Intel Corporation) processor special features, Performance Monitor Registers, Brach trace buffers, etc. See, for example, www.usenix.org/events/osdi2000/wiess2000/full_papers/hundt/hundt.pdf.

Another approach is discussed in "Fine-Grained Dynamic Instrumentation of Commodity Operating System Kernels" (www.usenix.org/publications/library/proceedings/osdi99/full_papers/tamches/tamches.pdf). This approach involves some pre-processing, which extracts kernel symbols and looks for particular functions that require instrumentation. The branch instruction is then written over the relevant instruction at the instrumentation point.

In addition, an extremely common security flaw arises from vulnerability due to buffer overflows. Buffer overflows are commonly used to execute some malicious code on the stack of a target computer. An overflow in a local variable maintained in the stack memory may overwrite the return address preserved during the Call phase by a different value. A hacker can exploit this effect by replacing the return address with an arbitrary value that points to the hacker's set of malicious instructions. As a result, the control of execution can be redirected to these malicious instructions, with potentially adverse consequences for the affected host or network to which that host belongs. The result of this security breach can range from minor (such as the crash of a non-critical application) to severe (such as a root compromise attack or Denial of Service problem in critical services due to the daemon crashes).

Two existing techniques for addressing this problem use, respectively, Stack Shield (a trade mark of Vendicator: see www.angelfire.com/sk/stackshield/info.html) and StackGuard (a trade mark of WireX Communications, Inc.: see www.cse.ogi.edu/DISC/projects/immunix/StackGuard/usenixsc98_html/). Stack Shield is a compiler solution that provides protection by taking a copy of the Return Pointer and temporarily placing it in a location (such as heap) that cannot be overwritten by an overflow in the stack. In the epilogue phase of function calls, the original and the saved Return Pointers are compared; if they are not the same, Stack Shield terminates the program citing "stack overrun". StackGuard is similar to Stack Shield: it detects stack overflows and terminates offending programs.

Both Stack Shield or Stack Guard work well in preventing buffer overflow attacks, but are essentially compiler solutions and require changing binaries so cannot be applied on legacy binaries.

Another existing technique uses a non-executable stack, which is a memory management solution in which the execution rights on stack pages are disabled. A program that attempts to execute from stack pages will generate an execution protection trap. This non-executable stack approach detects buffer overflow attacks by terminating the program that attempted to execute from stack memory pages. However, this approach still allows the root cause of the problem, that is, the overwriting of return addresses. A hacker can thus still execute codes from places such as heap or code.

Split stacks in software and hardware are also used to prevent buffer overflow attacks, by segregating data and control stacks into two. Return address pointers, which are part of the control stack, are allocated to memory that is disjoint from the memory intended for the program's stack storage. This ensures that any leak of local (stack) variables cannot result in the return address replacement. There are two existing implementations of this type. The first is in software and is a compiler solution (see citeseer.nj.nec.com/574758.html); the second is a pure hardware implementation (see expert.ics.purdue.edu/~cyprian/SmashGuard/SmashGuard_TR1_Dec02.pdf).

An existing variant of the hardware split stack approach employs a Reliable Call/Return Address Stack-Pair/Secure Return Address Stack, which is conceptually similar to Return Address Stacks. Return Address Stacks (see citeseer.nj.nec.com/574758.html) are used for branch prediction. To improve unconditional branch prediction, modern processors keep - in silicon - a FIFO stack of the return addresses of function calls. Every time a CALL instruction is executed, its return address is pushed onto the stack. Every time a RETURN instruction enters the pipeline, the next address is popped off the stack and the processor continues fetching from the associated address seamlessly. This is thus an architecture-based hardware solution for detecting buffer overflow attacks, in which a buffer overflow checking mechanism is added to the traditional return address stack. The Secure Return Address Stack is discussed in citeseer.nj.nec.com/574758.html, while Reliable Call/Return Address Stack-Pair are discussed in www.ece.neu.edu/students/dye/rsp.html.

However, purely hardware based solutions cannot distinguish between a genuine function return to a different location effected by using stack unwinding features (such as setjmp/longjmp) and an illicit redirection of function returns, possibly caused by a virus.

### SUMMARY OF THE INVENTION

In a first broad aspect, the present invention provides a method for inserting code during execution of a process in a computing environment, comprising:
enabling taken branch traps on the process; and
intercepting a branch encountered during execution of the process; and
redirecting processing of the branch instruction to a routine.

In one particular embodiment, the intercepting of the branch and the redirecting of processing are performed by a trap handler.

Thus, the trap handler acts as a branch interceptor. The routine may contain or comprise the code. Further, the processing of the routine may depend on a property of the branch (such as its identity or target) that has been intercepted.

For example, the routine may comprise a tracing routine for performing tracing, a profiler for performing profiling or a buffer overflow detector for detecting (and possibly handling) a buffer overflow attack.

The trap handler may be configured to intercept and respond - while taken branch traps are enabled - to a plurality of branches encountered during execution of the process or to any branches encountered during execution of the process. However, the method may include disabling taken branch traps under particular circumstances (as is discussed further below) .

In one embodiment, the method includes rewriting (preferably by means of the trap handler) an original target of the branch instruction that prompted the branch to a function call interceptor.

In one embodiment, the method includes processing the branch instruction that prompted the branch via a trap disabled further branch instruction after processing the routine (and hence the predefined task of the routine, such as profiling or buffer overflow attack detection). For example, if taken branch traps have been used to attach one or more programs to debuggers for enabling debugging on those programs, this technique could be used to allow the programs to refuse to accept any such forced debugging.

In some embodiments, the method is adapted to perform dynamic code insertion.

Thus, although many processors (including RISC processors) allow the generation of "taken branch traps" whereby a trap is generated whenever a branch instruction is taken, such taken branch traps are intended for debugging, tracing and the like. Nevertheless, it has been found to be possible to change the execution control to the routine by means of taken branch traps and the branch interceptor. Processors that support taken branch traps define ways to enable and disable the taken branch traps as required, but generally taken branch traps are disabled by default. In most cases, taken branch traps are handled by the OS kernel, which can use them to assist in debugging programs for break points. Thus, this aspect of the present invention allows a user to deploy a dynamic patch only when required. It will be understood that, while reference is made above to taken branch traps, this feature can be in the form of other functions that permit the trapping of branching.

Taken branch traps are generally turned on against a thread or process, resulting in traps being generated on every branch and branch return. Taken branch traps are generally generated after the branch is made, in the instruction completer.

The routine can comprise one or more instructions, and in one embodiment comprises a stub.

In one embodiment, the routine comprises a stub that redirects processing to a wrapper (or "trampoline") function.

The method may include replacing a branch target of the branch instruction that prompted the branch with a wrapper function.

Thus, during execution, the trampoline could be executed followed by the original branch target. This approach can be useful for observing returns from functions; in some cases, such as where there is insufficient room in the function to be called to insert code owing to that function having perhaps only one or two instructions, it may be the only viable approach.

The method may include inserting at an entry to a target function of the branch instruction that prompted the branch a further branch instruction. The further branch instruction may branch to a wrapper function.

This approach is preferred for observing function calls (such as library functions) that are invoked from many places. In such cases, this approach limits the code insertion to a single location.

In one embodiment, the method includes avoiding any taken branches when the code is active to avoid the method's becoming recursive.

In another embodiment, the method includes providing the branch instruction that prompted the branch with a completer that indicates whether or not further traps should be generated.

This is to reduce the effect of taken branch traps on program performance: any further traps on branches that have already been processed can be prevented as the instructions are already in place to handle them. That is, further traps can be avoided on the branch instructions of i) branches to (for example) trampolines that observe branch calls and returns, and ii) branches within (for example) trampolines that are written for observing branch calls and returns.

The PA-RISC (a trade mark of Hewlett-Packard Company processor provides SSM (Set System Mask) and RSM (Reset System Mask) instructions, which allow the creation of branches without obtaining taken branch traps. A bit (called "T bit") is provided in the Processor Status Word (PSW) for enabling or disabling taken branch traps. It is thus possible by means of SSM and RSM to make "taken branch trap free" branches as follows:
RSM "PSW T" ; turn off taken branches
BRANCH <target>
SSM "PSW T" ; turn off taken branches

It should be noted, however, that RSM and SSM are privileged instructions that cannot be run directly from user space and that there is an overhead of two instructions per branch.

In a certain embodiment, the method provides a profiler, while in another embodiment, the method provides a tracer.

In a second broad aspect, the present invention provides a method for inserting code during execution of a process in a computing environment, comprising:
enabling taken branch traps on the process; and
providing a trap handler for intercepting a branch encountered during execution of the process and redirecting processing of the branch instruction to a routine.

The trap handler may be configured to intercept and respond - while taken branch traps are enabled - to a plurality of branches encountered during execution of the process or to any branches encountered during execution of the process. However, the method may include disabling taken branch traps under particular circumstances (as is discussed further below) .

According a third aspect of the present invention, there is provided a method of detecting stack or buffer overflows, comprising:
enabling taken branch traps on the process;
intercepting a branch encountered during execution of the process; and
redirecting processing of the branch;
storing a copy of a return address to which processing is intended to return after said branch instruction; and
comparing a return address for a return instruction and the copy of the return address to determine whether to execute the return instruction.

In one embodiment, the method includes redirecting processing to a routine that performs the storing of the copy of the return address. In one particular embodiment, the intercepting of the branch and the redirecting of processing are performed by a trap handler.

In one embodiment, if the return address provided to the return instruction is not the same as the copy of the return address, the method includes refraining from executing the return instruction. In such cases, the method may include terminating the process.

The method may include intercepting - while taken branch traps are enabled - a plurality of or any branches encountered during execution of the process

It will be understood that a stack or buffer overflow is a likely explanation for a difference between the return address for the return instruction and the copy of the return address, but others explanations are possible and the utility and scope of this aspect of the invention is not limited by the actual explanation.

In one embodiment, the method includes providing software portions for determining whether any difference between the return address for the return instruction and the copy of the return address is due to a genuine or an illicit branch.

In a particular embodiment, the method is adapted for handling a setjmp/longjmp pair (or pairs), and in another embodiment the method is adapted for handling a try/catch exception (or exceptions).

In another broad aspect the invention provides a computing apparatus provided with a program that implements either of the aspects described above. In still another aspect of the invention, there is provided a computer readable medium provided with program data that, when executed on a computing apparatus, implements either of the aspects described above.

### BRIEF DESCRIPTION OF THE DRAWING

In order that the invention may be more clearly ascertained, embodiments will now be described, by way of example, with reference to the accompanying drawing, in which:
FIG. 1 is a schematic view of a computer provided with software for carrying out the method of an embodiment of the present invention.
FIG. 2A is a schematic depiction of a special memory area in which trampoline functions and a return pointer stack have been allocated memory according to the embodiment of FIG.1;
FIG. 2B is a schematic depiction of an alternative arrangement to that of FIG. 2A, in which a program stack is used for storing return pointers.
FIG. 3 is a schematic diagram of the sequence of execution of a program for detecting buffer overflows according to anther embodiment of the present invention; and
FIG. 4 is a schematic view of a data storage medium according to still another embodiment.

### DETAILED DESCRIPTION OF THE EMBODIMENTS

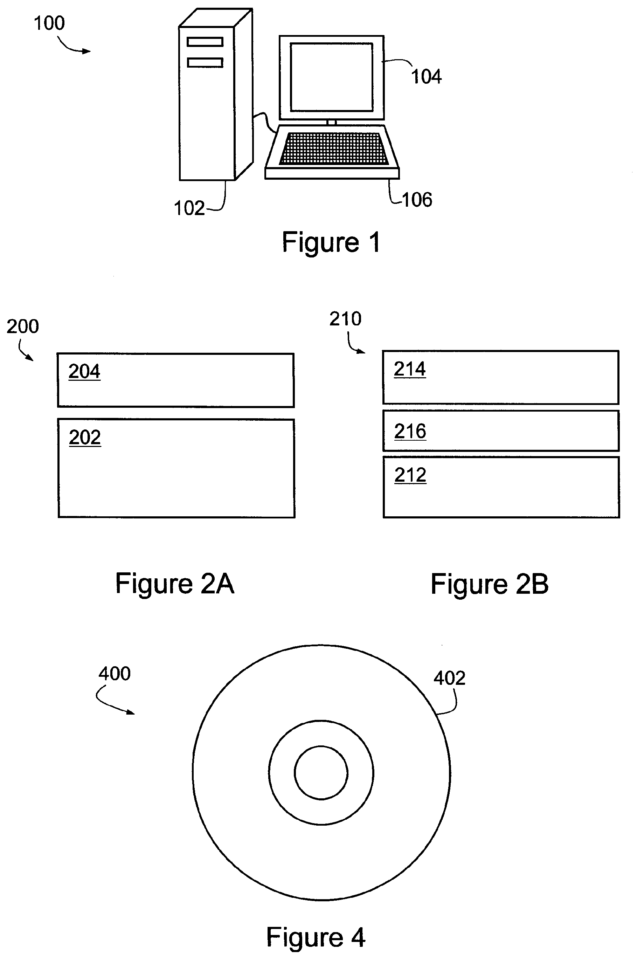

According to an embodiment of the present invention, there is provided a method of dynamically inserting instruction stubs in a program. Referring to figure 1, the program is loaded into the memory of a computer 100 (having CPU box 102, display 104 and keyboard 106). The CPU box 102 includes a hard disk, RAM, communications bus, etc., as well as a PA-RISC processor (though it will be appreciated that it could also be in the form of any other processor that also supports taken branch traps or like functionality for trapping branching).

In addition to the program, the computer 100 includes a software trap handler in the form of a branch interceptor for intercepting and responding to taken branch traps generated in response to branching during execution of the program (when taken branch traps are enabled on the program) . This allows the dynamic insertion of code in the form of instruction stubs during program execution. This is explained in greater detail below by reference to a number of Examples.

In broad terms, however, taken branch traps are enabled on the program. The traps are intercepted by the trap handler, which - as mentioned above - includes code for execution upon receipt of such a trap.

According to this embodiment, code insertion can then be effected in a number of ways. For example, one approach is to replace the branch target of the branch instruction with a trampoline function. During execution, the trampoline is executed followed by the original branch. This approach can be useful for observing returns from functions.

Another approach involves inserting a branch instruction upon entering a function. The branch instruction that branches to the trampoline is inserted at the entry of the original function. This approach is preferred for observing function calls (such as library functions) that are invoked from many places.

The following brief example provides an illustration of these two approaches; the first is used for handling function calls and the second for observing returns from functions. It is assumed that a PA-RISC processor is used. In this example, a C program has a main() function that calls function_A(). The task is to insert trampoline_call() and trampoline_return () for function call and return respectively.
main+20 : BE function_A
main+24 : LD0 0(r0),r26
...
function_A :
function_A+0 : STW r0,―16(r30)
function_A+4 : LDO 64(r30),r30
...
function_A+64 : BV 0(rp)

The code insertion is accomplished as follows:
Save the instruction at function_A+0
Replace the instruction at function_A+0 with a branch instruction that branches to trampoline_call()
Save the return instruction at function_A+64
Replace the instruction at function_A+64 with a branch instruction that branches to trampoline_return()

The algorithms for the call and return trampolines are then as follows:

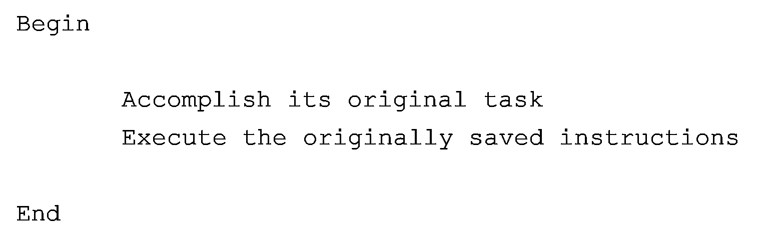

Whichever approach is adopted, in this embodiment the branch instruction expresses in its completer whether or not a trap is actually required. This expression has precedence over the taken branch trap global mask (global to thread or process).

In this embodiment, such a branch instruction has the following syntax:
<branch>,[DTBT|ETBT|NONE],<branch target>

The instruction completers DTBT, ETBT and NONE have the following meanings:
- DTBT :: disable taken branch traps;
- ETBT :: enable taken branch traps;
- NONE :: Trap as per global mask state.

If the completer DTBT is used, no trap is generated irrespective of the taken branch trap global mask. If the completer ETBT is used, a trap is generated irrespective of the taken branch trap global mask. NONE makes the default behaviour possible.

### EXAMPLE 1

A first example according to this embodiment is a general purpose dynamic code insertion method that can be used for profiling, function tracing, implementing buffer overflow detection algorithms dynamically.

To facilitate insertion, taken branch traps are enabled against applications. This trap handler rewrites the original branch target to a function call interceptor. The interpreter, after its predefined task (such as profiling or buffer overflow attack detection), makes the original branch via a trap disabled branch instruction.

The following example is a C program with a main() that calls function_A():
main+20 : BE function_A
main+24 : LD0 0 (r0),r26
...
function_A:
function_A+0: STW r0,-16(r30)
function_A+4: LDO 64(r30),r30
...
function_A+64: BE 0(rp)
)

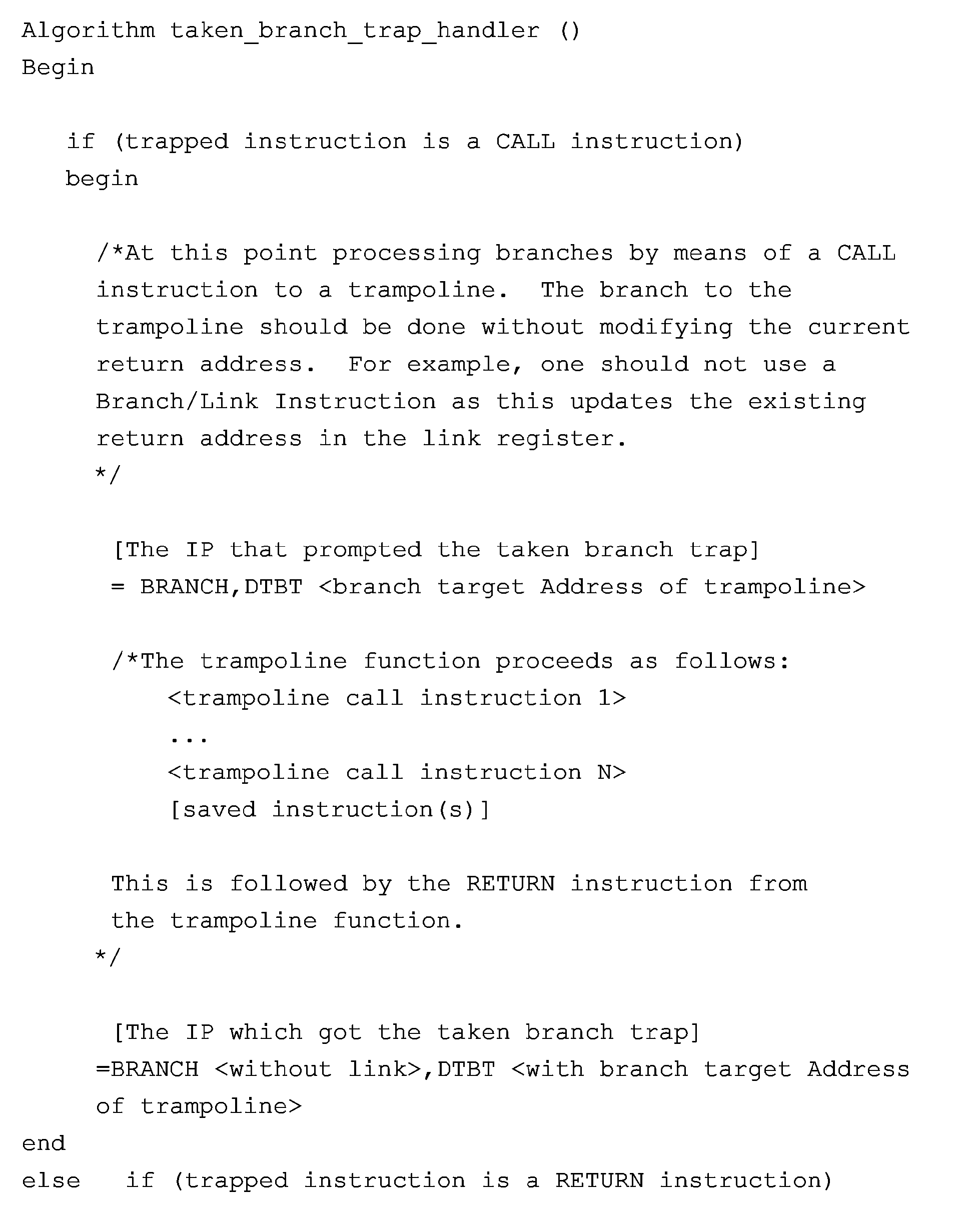

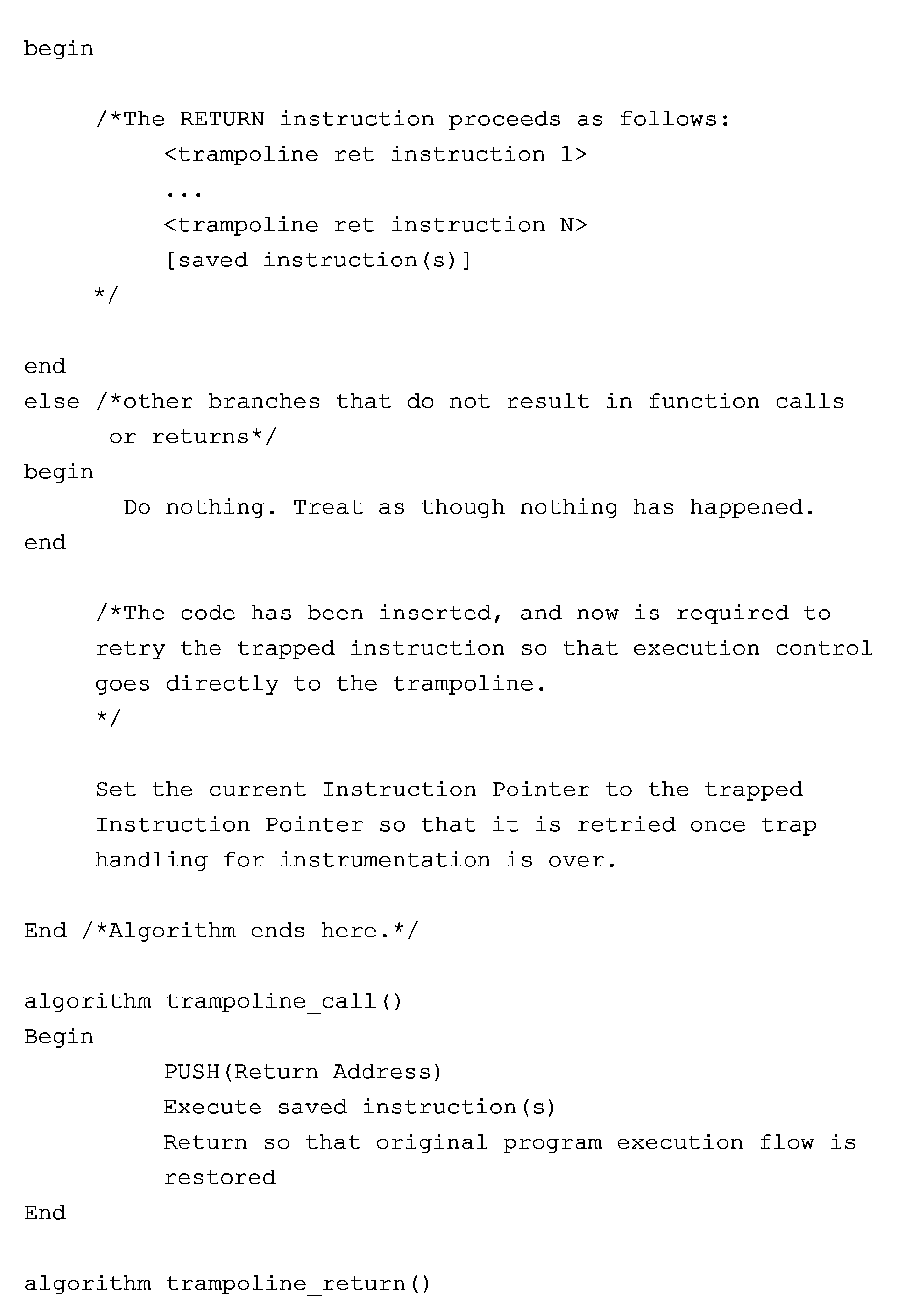

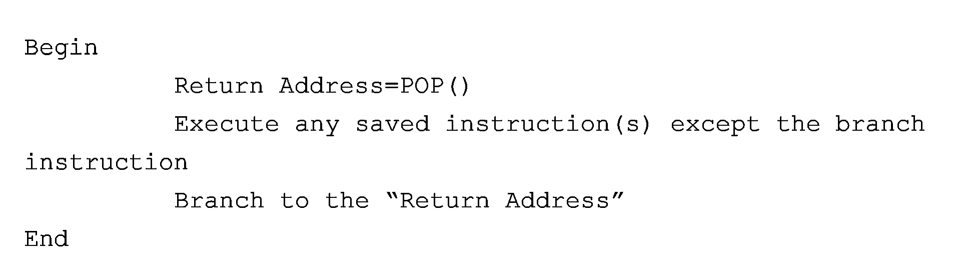

Once these dynamic trampolines are in place, no further traps on the branch instruction can occur. The inserted dynamic stubs are executed when their callers (i.e. the functions that call them) are invoked.

The trampoline functions and the Return Pointer stack are allocated as follows:
a) Using special memory area
   Figure 2A is a schematic depiction of a special memory area 200. If it is possible to have a such an area, the trampoline functions 202 and the Return Pointer (RP) stack 204 can be allocated to special memory area 200 with the trampoline functions 202 low and the RP stack 204 high.
   The trampoline contains instructions that were saved to make room for the code instrumentation. The creation of trampolines is done in the kernel with kernel-only-write protection. At the same time, the memory pages corresponding to trampolines will have sufficient rights for execution by a user space program.
b) Using the program stack
   Figure 2B is a schematic depiction of the program stack 210, which can be used for storing return pointers. The RP stack/Trampoline functions are stored in an area 212 high, and the Program's stack 214 is stored low. A RED ZONE page 216 without access rights is created between the RP stack/Trampoline functions area 212 and the Program's stack 214, to ensure that the Program's stack 214 does not run into the RP stack/Trampoline functions area 212 lest it corrupt the RP stack or the trampoline functions.

### EXAMPLE 2

Binary (ABI) compatible software split stacks mechanisms are implemented to prevent stack-based attacks without any added performance penalty. This is particularly useful with processors that employ register linked procedure calls and returns, though it is not limited to such processors. Register linked procedure calls and returns employ a link register; the branch instruction saves the return address in this link register for later use by the return instructions.

Inserting a function call at run time can create run time overhead penalties. If a processor provides the support for Register linked function calls, it is possible to achieve protection from stack-based attacks without adding any extra code.

Normally only one such register is available in a processor. In order to facilitate nested functions, it is required to preserve the link register's contents across functions. It is software's responsibility to preserve the link register's contents in the case of nested function calls.

However, stack buffer overflows can create security problems when the link register spill-fill mechanism uses the stack for storage, which is so in most cases. A stack buffer overflow can overwrite the saved link register's contents during the spill and fill load the overwritten data into the link register. As a result, the program's execution control can be redirected to some place other than its usual execution path. The act of gaining control of a program by creating a stack overflow is known as a stack-based attacks.

A split-stack mechanism can prevent stack-based attacks. Such attacks can be prevented if a microprocessor can provide the following facilities:
● A Link Register (LR) for retaining return addresses;
● An unused register accessible from user space (i.e. with the lowest privilege level) and can be used as a Return Address Stack (RAS) Pointer. This register is similar to a Stack Pointer (SP) register, but keeps Return Addresses. The RAS is initialized with a memory location that cannot be overwritten by a stack overflow in the program's stack;
● LOAD and INCREMENT/DECREMENT, STORE and INCREMENT/DECREMENT instructions for stack management. For example PA-RISC provides MA (Modify After) and MB (Modify Before) prefixes with its store and load instructions.

The following program is provided as an example:.

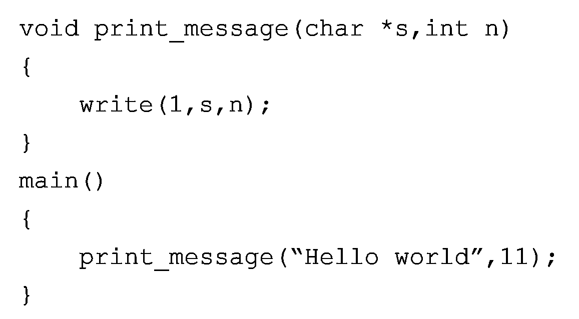

The normal execution sequence of main() is as follows:

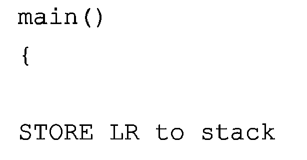

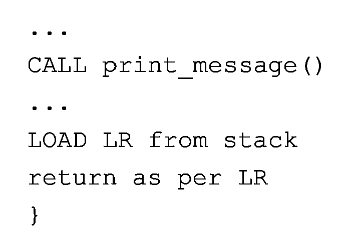

Thus, in a second example of the present embodiment, the branch trap handler of this embodiment is employed in this scenario with the following effects:
1) The initial value of the RAS register is the highest possible address that the stack can grow up to. If the contents of the RAS do not include a mapped physical page, a new physical page is allocated for the virtual address that the RAS contains. The virtual memory subsystem updates its mapping.
2) If the branch instruction is a CALL instruction, an instruction to save the LR to the RAS replaces the instruction to save the LR to the stack.
3) If the branch instruction is a RETURN instruction, an instruction to restore the LR from the RAS replaces the instruction to load the LR from the stack.
4) Once the instrumentation is in place, taken branches on the processed branch are disabled. This is accomplished by adding the completor DTBT ("disable taken branch traps") to the trapped branch instruction.

It should be noted that the RAS can grow from high to low or low to high: it is assumed that the program's stack grows from low to high, so the RAS will grow from high to low.

Effects 1) and 2) result in the following execution sequence for main():

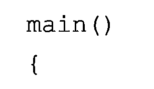

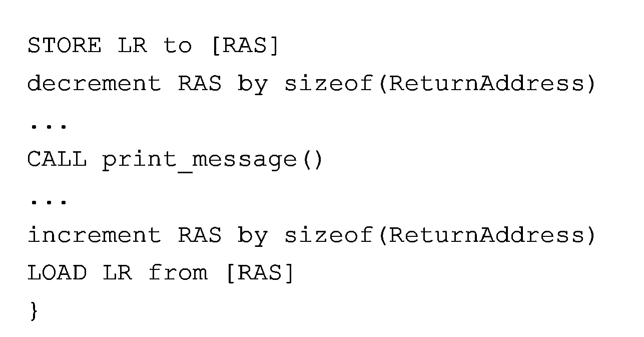

### EXAMPLE 3

Example 3 is comparable to Example 2, and involves using taken branch processor traps to identify stack buffer overflow security attacks as soon as they happen so that they can be prevented from affecting the targeted host computer. The detection is symptom-triggered, and is effected by seeing whether the return address saved in the stack (or some other memory for nested function calls) is replaced by a different value or not. If the return address is replaced, then it could be a result of buffer overflow security attack. When a buffer overflow attack is detected in this way, preventive action can be taken; this may involve terminating the affected program.

The buffer overflow detection and prevention logic contains two steps:
1) Making a function call interceptor available for buffer overflow detection; and
2) Enable taken branch traps against an application.

A function call interceptor is made available for buffer overflow detection by means of the algorithm branch_interceptor():

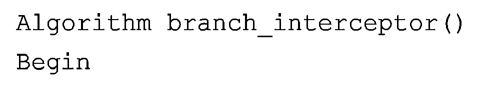

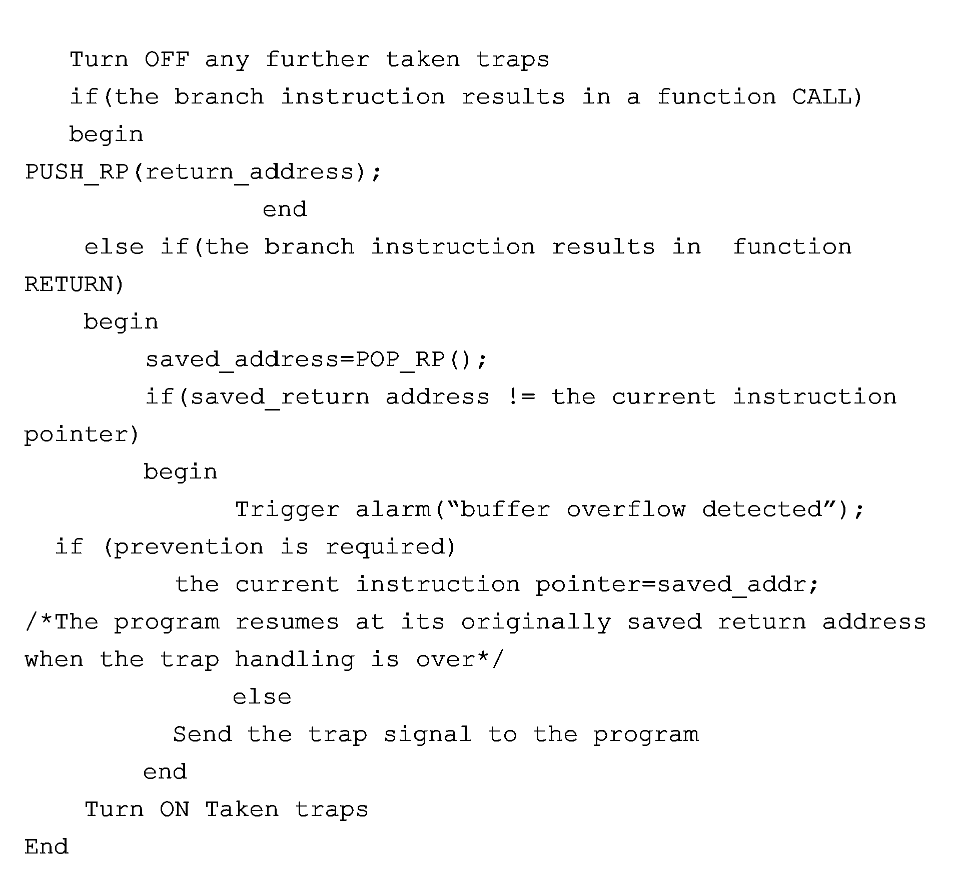

It is possible to demonstrate how this algorithm with a
simple exemplary C program (referred to as "test"), whose main() function calls a function x() that itself calls
another function y(). In outline, main (), x () and y() are might be summarized as follows:
main+0 : MOV reg1, reg2
main+4 : MOV reg3, reg4
...
main+20 : CALL x
main+24 :
...
main+128: RETURN
x+0 : ADD reg3, reg4
x+4 : ADD reg3, reg1
...
x+24 : CALL y
x+28
...
x+32 : RETURN
y+0 : ADD reg3, reg4
y+4 : SUB reg3, reg1
y+8 : RETURN

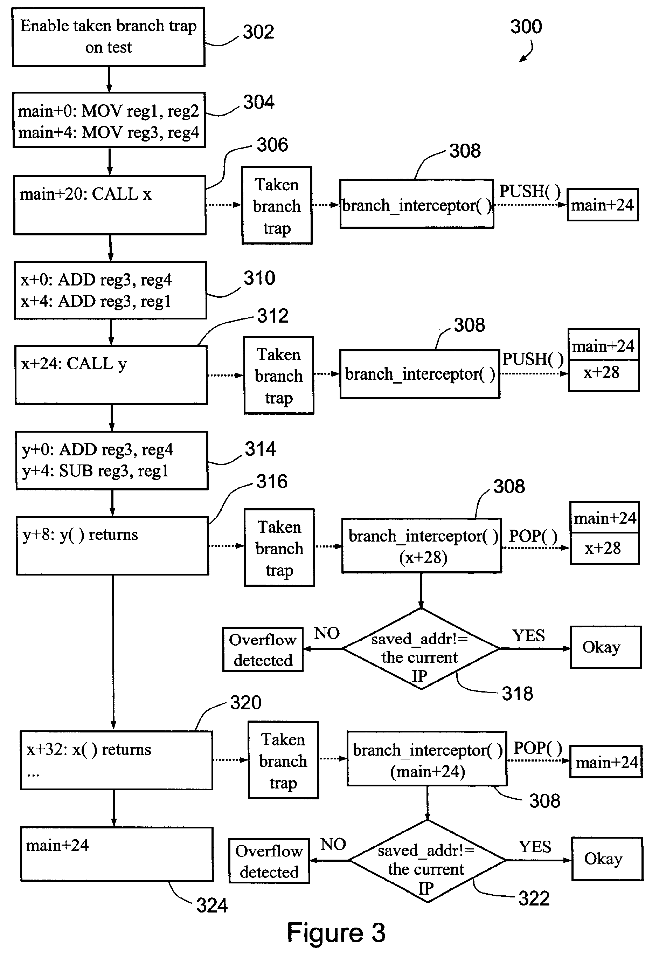

When test is executed, the program is processed according to the sequence illustrated by means of schematic diagram 300 of figure 3.

At step 302, taken branch traps are enabled on test. At step 304, main() commences until, at step 306, main() invokes the first function call x(). Taken branch traps are enabled, so in response a taken branch trap is generated and detected by branch_interceptor () 308. Function x() proceeds at step 310 until, at step 312, x() invokes y(); a taken branch trap is generated and detected by branch_interceptor() 308.

Function y() proceeds at step 314 until, at step 316, y() returns to x(), which again generates a taken branch trap that is detected by branch_interceptor() 308. At step 318, branch_interceptor() 308 checks whether the saved_addr != the current IP address; if YES (i.e. the two addresses differ), an overflow has been detected. Program execution would generally be interrupted in some way (and possibly terminated) .

If NO (i.e. the two addresses are identical), no overflow has been detected and presumably all is okay. Program execution would then normally continue uninterrupted. Hence, control would proceed at step 320 at which x() returns to main() . This again generates a taken branch trap that is detected by branch_interceptor() 308. At step 322, branch_interceptor() 308 checks whether the saved_addr != the current IP address; if YES (i.e. the two addresses differ), an overflow has been detected. If NO (i.e. the two addresses are identical), no overflow has been detected and presumably all is okay: control can pass back to main() at main+24 324.

To enable taken branch traps against an application, an application tunable called enable_bof_detection is defined. This tunable can be read by the operating system while preparing to run the program. If this variable is set, the operating system enables the taken branch trap just before giving execution control to the program.

### EXAMPLE 4

In Example 4 of this embodiment, setjmp and longjmp (which save and restore the state of a program) are handled. For setjmp and longjmp, the function branch_interceptor() is modified (as compared with the version given above in Example 3):

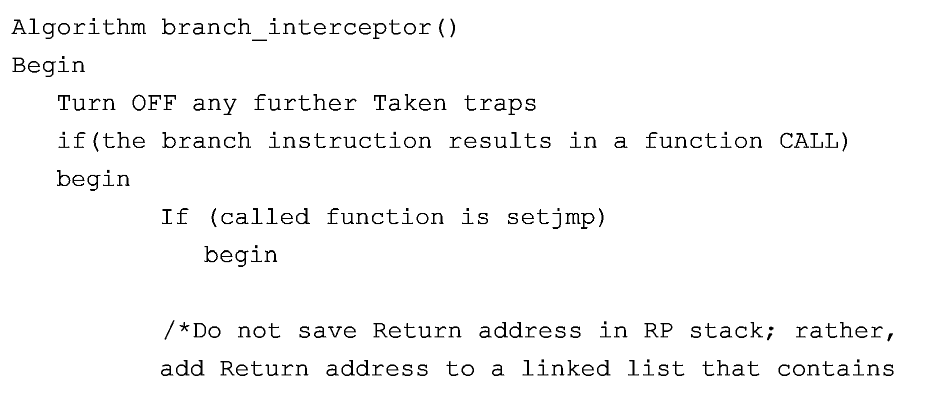

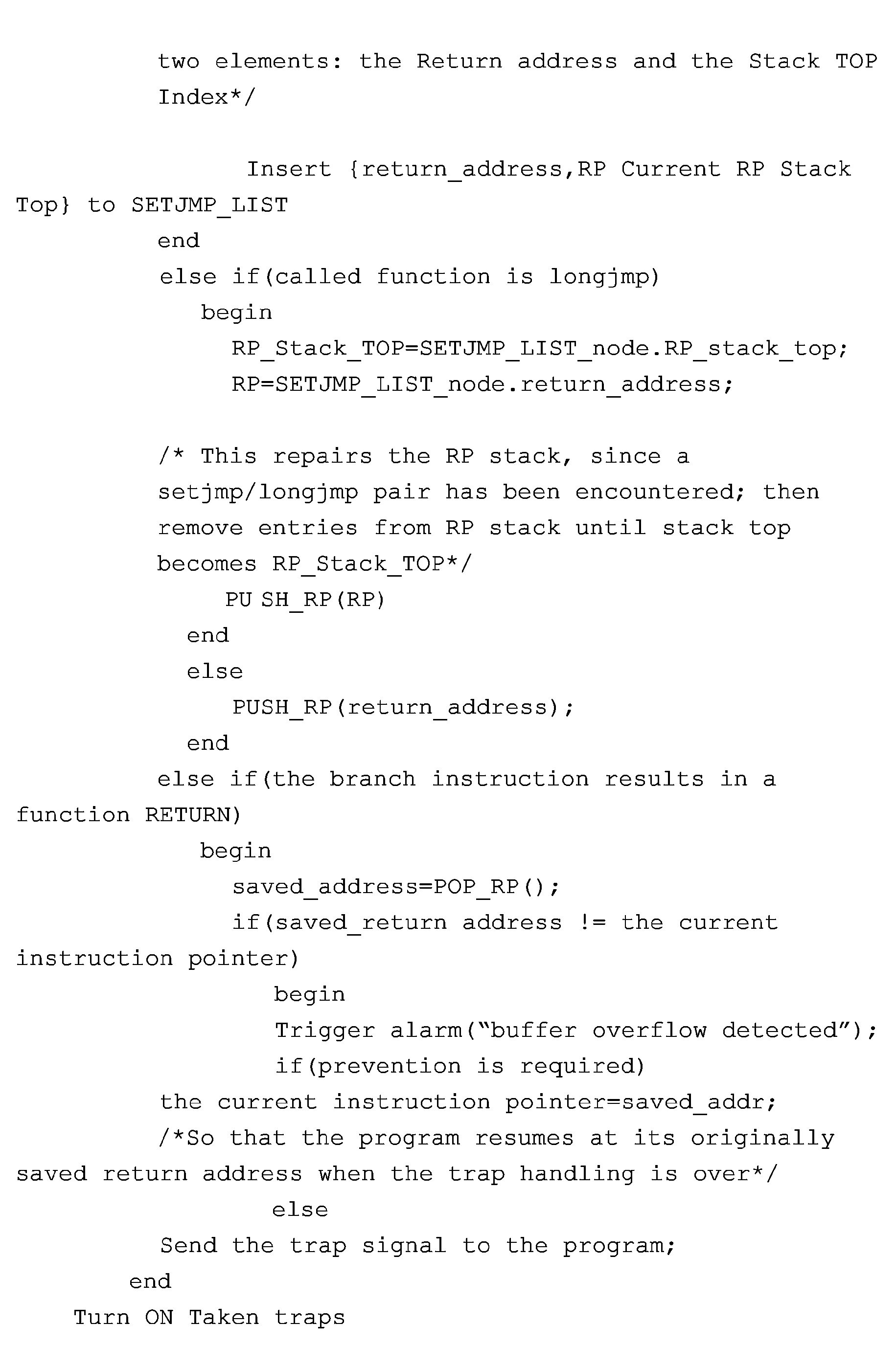

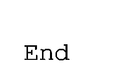

FIG. 4 is a schematic view of a data storage medium 400 according to another embodiment. The data storage medium 400 is in the form of a CD-ROM 402 that contains program instructions for dynamically inserting code in any of the manners described above by reference to FIGS. 1 to 3. It will be understood that, in this embodiment, the particular type of data storage medium may be selected according to need or other requirements. For example, instead of CD-ROM 402 the data storage medium 400 could be in the form of a magnetic medium, but essentially any data storage medium will suffice. Indeed, the user need not be aware of which type of data storage medium is used, as the actual data storage medium could be located and accessed remotely.

Thus, a dynamic code insertion scheme is provided that does not require re-compilation and so can be turned on at any time and can be applied on legacy binaries. The above described embodiments allow fully dynamic code insertion, unlike those existing approaches that require some pre-processing (such as saving the branch instruction and replacing it with a break instruction to generate a trap during execution).

These embodiments of the invention should be particularly simple to implement in microprocessors that support taken branch traps and provide instruction completers; few backward compatibility problems are expected.

These embodiments also allow the creation of accurate profilers and tracers - many existing profilers use inaccurate data by collecting the samples at some regular interval (such as by inserting a thin profile data collection function on the entry and exit of functions). This allows the development of a function tracing mechanism for logging data (such as incoming and outgoing parameters), or the state of various registers.

The foregoing description of the exemplary embodiments is provided to enable any person skilled in the art to make or use the present invention. While the invention has been described with respect to particular illustrated embodiments, various modifications to these embodiments will readily be apparent to those skilled in the art, and the generic principles defined herein may be applied to other embodiments without departing from the spirit or scope of the invention. It is therefore desired that the present embodiments be considered in all respects as illustrative and not restrictive. Accordingly, the present invention is not intended to be limited to the embodiments described above but is to be accorded the widest scope consistent with the principles and novel features disclosed herein.

## Claims

**1.** A method for inserting code during execution of a process in a computing environment, comprising:
enabling taken branch traps on the process; and
intercepting a branch encountered during execution of the process; and
redirecting processing of the branch instruction to a routine.

**2.** A method as claimed in claim 1, wherein the intercepting of the branch and the redirecting of processing are performed by a trap handler.

**3.** A method as claimed in claim 2, wherein the trap handler is configured to intercept and respond while taken branch traps are enabled either to a plurality of branches encountered during execution of the process or to any branches encountered during execution of the process.

**4.** A method as claimed in claim 1, including rewriting an original target of the branch instruction that prompted the branch to a function call interceptor.

**5.** A method as claimed in claim 1, including processing the branch instruction that prompted the branch via a trap disabled further branch instruction after processing the routine.

**6.** A method as claimed in claim 1, wherein said routine comprises at least one stub.

**7.** A method as claimed in claim 6, wherein said code comprises a stub that redirects processing to a wrapper function.

**8.** A method as claimed in claim 1, including replacing a branch target of the branch instruction that prompted the branch with a wrapper function.

**9.** A method as claimed in claim 1, including inserting at an entry to a target function of the branch instruction that prompted the branch a further branch instruction.

**10.** A method as claimed in claim 8, wherein said further branch instruction branches to a wrapper function.

**11.** A method as claimed in claim 1, including avoiding any taken branches when the routine is active so that the method does not become recursive.

**12.** A method as claimed in claim 1, including providing the branch instruction that prompted the branch with a completer that indicates whether or not further traps should be generated.

**13.** A method as claimed in claim 1, wherein said method acts as a profiler.

**14.** A method as claimed in claim 1, wherein said method acts as a tracer.

**15.** A method for inserting code during execution of a process in a computing environment, comprising:
enabling taken branch traps on the process; and
providing a trap handler for intercepting a branch encountered during execution of the process and redirecting processing of the branch instruction to a routine.

**16.** A method as claimed in claim 15, wherein the trap handler is configured to intercept and respond while taken branch traps are enabled to either a plurality of branches encountered during execution of the process or to any branches encountered during execution of the process.

**17.** A method for inserting code during execution of a process in a computing environment, comprising:
providing a trap handler for intercepting a branch encountered during execution of the process while taken branch traps are enabled on the process and redirecting processing of the branch instruction to a routine.

**18.** A method of detecting stack or buffer overflows, comprising:
enabling taken branch traps on the process;
intercepting a branch encountered during execution of the process; and
redirecting processing of the branch;
storing a copy of a return address to which processing is intended to return after said branch instruction; and
comparing a return address for a return instruction and the copy of the return address to determine whether to execute the return instruction.

**19.** A method as claimed in claim 18, including redirecting processing to a routine that performs the storing of the copy of the return address.

**20.** A method as claimed in claim 18, wherein the intercepting of the branch and the redirecting of processing are performed by a trap handler.

**21.** A method as claimed in claim 18, including refraining from executing the return instruction if the return address provided to the return instruction is not the same as the copy of the return address.

**22.** A method as claimed in claim 21, including terminating the process.

**23.** A method as claimed in claim 18, including intercepting a plurality of or any branches encountered during execution of the process

**23.** A method as claimed in claim 18, including providing software portions for determining whether any difference between the return address for the return instruction and the copy of said return address is due to a genuine or an illicit branch.

**24.** A method as claimed in claim 18, including providing the branch instruction that prompted the branch with a completer that indicates whether or not further traps should be generated.

**25.** A method as claimed in claim 18, wherein said method is adapted for handling a setjmp/longjmp pair or a try/catch exception.

**26.** An apparatus for inserting code during execution of a process in a computing environment, comprising a trap handler for intercepting at least one branch encountered during execution of the process and responding thereto by redirecting processing of the branch instruction to a routine.

**27.** A computing apparatus provided with program portions that when executed implement the method of any one of claims 1, 15, 17 and 18.

**28.** A computer readable medium provided with program data that, when executed on a computing apparatus, implements the method of any one of claims 1, 15, 17 and 18.
